# EUROPEAN PATENT SPECIFICATION

(11) **EP 3 188 413 B1**
(45) Date of publication and mention of the grant of the patent: **20.03.2019**
(21) Application number: 16202802.1
(22) Date of filing: 08.12.2016
(51) Int. Cl.: H04L 12/26

(54) **METHOD, APPARATUS, AND SYSTEM FOR IMPLEMENTING PACKET LOSS DETECTION**
VERFAHREN, VORRICHTUNG UND SYSTEM ZUR IMPLEMENTIERUNG VON PAKETVERLUSTDETEKTION
PROCÉDÉ, APPAREIL ET SYSTÈME DE MISE EN UVRE DE DÉTECTION DE PERTE DE PAQUETS

(30) Priority: 30.12.2015 CN 201511026130
(43) Date of publication of application: 05.07.2017
(73) Proprietor: Huawei Technologies Co., Ltd., Longgang District Shenzhen, Guangdong 518129 (CN)
(72) Inventor: Li, Guoping, shenzhen, Guangdong (CN); Xu, Xiaoyang, shenzhen, Guangdong (CN); Shi, Danian, shenzhen, Guangdong (CN)
(74) Representative: Kreuz, Georg Maria

(56) References cited:
- US-A1- 2006 092 850
- US-A1- 2013 088 994
- US-A1- 2015 023 179
- FROST S BRYANT CISCO SYSTEMS D: "Packet Loss and Delay Measurement for MPLS Networks; draft-ietf-mpls-loss-delay-04.txt", PACKET LOSS AND DELAY MEASUREMENT FOR MPLS NETWORKS; DRAFT-IETF-MPLS-LOSS-DELAY-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 4, 19 July 2011 (2011-07-19), pages 1-52, XP015077441,

## Description

### TECHNICAL FIELD

The present invention relates to the field of communications technologies, and in particular, to a method, an apparatus, and a system for implementing packet loss detection.

### BACKGROUND

In a communications network, a packet loss rate is a very important parameter for reflecting communications network quality. Particularly, in a high-throughput data center network, a high packet loss rate greatly affects a service. Real-time packet loss rate detection is of great significance to monitor network quality in real time and locate a problem.

Packet loss mainly falls into two types: packet loss caused by a fault and packet loss caused by congestion. A fault generally refers to a fault on a link between network elements, a fault on a chip inside a network element, or the like. Congestion is a main reason for packet loss, especially in such a scenario of the high-throughput data center network.

In the prior art, a packet loss rate between two network elements (which are subsequently referred to as a first network element and a second network element) is generally detected in the following manner: The first network element sends packets in batches to the second network element; and the second network element collects statistics about a quantity of packets received by the second network element, and calculates a packet loss rate according to a quantity of packets sent by the first network element and the quantity of packets received by the second network element.

If packet loss detection is implemented by using this method, a detection function is required on each detected network element, causing relatively complex implementation and relatively high actual deployment costs.
US2015023179A1 relates to a method of characterizing a communications channel between two communications nodes, comprising: determining at least one feature of a communications path between a first communications node and a second communications node; determining at least one feature of a communications path between the first communications node and a third communications node; transmitting at least one packet from the first node to propagate through the second and third nodes and return to the first node; and determining at least one feature of the communications channel between the second and third nodes responsive to receiving the packet at the first node, the at least one determined feature of the first node and the second node, and/or information comprised in the packet.
US2013088994A1 relates to a method for measuring performance of multi-service in a tunnel, including: receiving a measurement message corresponding to a service packet, where a priority of the measurement message is the same as that of the service packet, and the measurement message includes at least one of the three: a packet loss measurement parameter, a delay measurement parameter, and a variation measurement parameter; and measuring performance of a service in a tunnel according to a measurement parameter in the measurement message. Draft-ietf-mpls-loss-delay-04 discloses that, many service provider service level agreements (SLAs) depend on the ability to measure and monitor performance metrics for packet loss and one-way and two-way delay, as well as related metrics such as delay variation and channel throughput.
US2006092850A1 relates to a technique for data network congestion diagnosis using remote estimation of round-trip delays. A monitoring node transmits test messages between network nodes and measures the transit times between when the test messages are transmitted from, and when they return to, the monitoring node. A path delay between network nodes is determined based on the measured time delays.

### SUMMARY

Embodiments of the present invention provide a method, an apparatus, and a system for implementing packet loss detection, which are used to resolve a prior-art problem of complex implementation and relatively high deployment costs.
The present invention is defined in the independent claims. Preferred embodiments are defined in the dependent claims.

According to the present invention, a packet loss rate between any two network elements (that is, a first network element and a second network element) in the communications network can be detected only by implementing a detection function on a detection apparatus,
without a need to implement the detection function on a detected network element, thereby resolving a prior-art problem of relatively complex implementation and relatively high actual deployment costs because the detection function is required on each detected network element.

### BRIEF DESCRIPTION OF DRAWINGS

To describe the technical solutions in the embodiments of the present invention more clearly, the following briefly introduces the accompanying drawings required for describing the embodiments.
FIG. 1 is a schematic diagram of a networking structure of a system 100 for implementing packet loss detection according to an embodiment of the present invention;
FIG. 2a-1, FIG. 2a-2, and FIG. 2b are schematic flowcharts of a method according to a first embodiment of the present invention;
FIG. 3a and FIG. 3b are schematic diagrams of a loopback path according to a first embodiment of the present invention;
FIG. 4 is a schematic diagram of a segment (English: segment) in a loopback path according to a first embodiment of the present invention;
FIG. 5 is a schematic structural diagram of a packet header according to a first embodiment of the present invention;
FIG. 6 is a schematic diagram of a packet sending process according to a first embodiment of the present invention;
FIG. 7a is a schematic structural diagram of a detection apparatus 200 according to a second embodiment of the present invention;
FIG. 7b is a schematic structural diagram of a detection apparatus 300 according to a third embodiment of the present invention;
FIG. 8 is a schematic structural diagram of a detection apparatus 1000 according to a fourth embodiment of the present invention; and
FIG. 9 is a schematic structural diagram of a detection system 2000 according to a fifth embodiment of the present invention.

### DESCRIPTION OF EMBODIMENTS

The following describes the technical solutions in the embodiments of the present invention with reference to the accompanying drawings in the embodiments of the present invention.

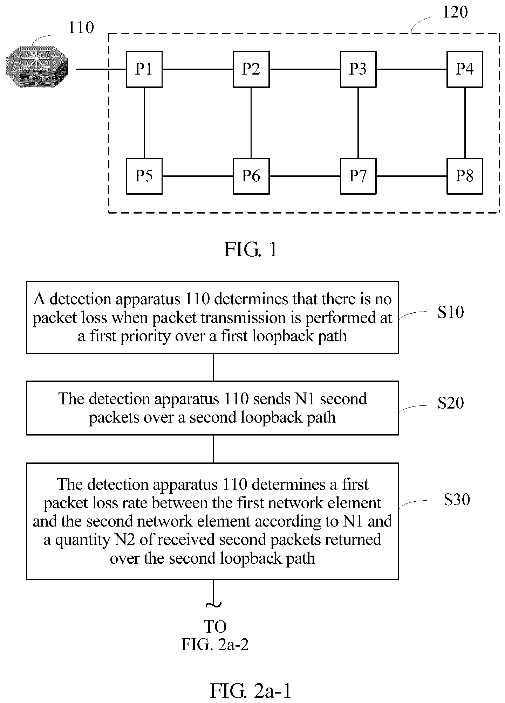

FIG. 1 is a schematic diagram of a networking structure of a system 100 for implementing packet loss detection according to an embodiment of the present invention. The system 100 includes a detection apparatus 110 and a communications network 120. The communications network 120 includes at least two network elements, and the detection apparatus 110 is connected to any network element (for example, a network element P1) in the communications network 120. The communications network 120 may be specifically a data center network, a wide area network, a local area network, or the like. The network element in the communications network 120 may be specifically a router, a switch, or the like.

The detection apparatus 110 may be configured to detect a packet loss rate between any two network elements (for example, a network element P2 and a network element P8) in the communications network 120.

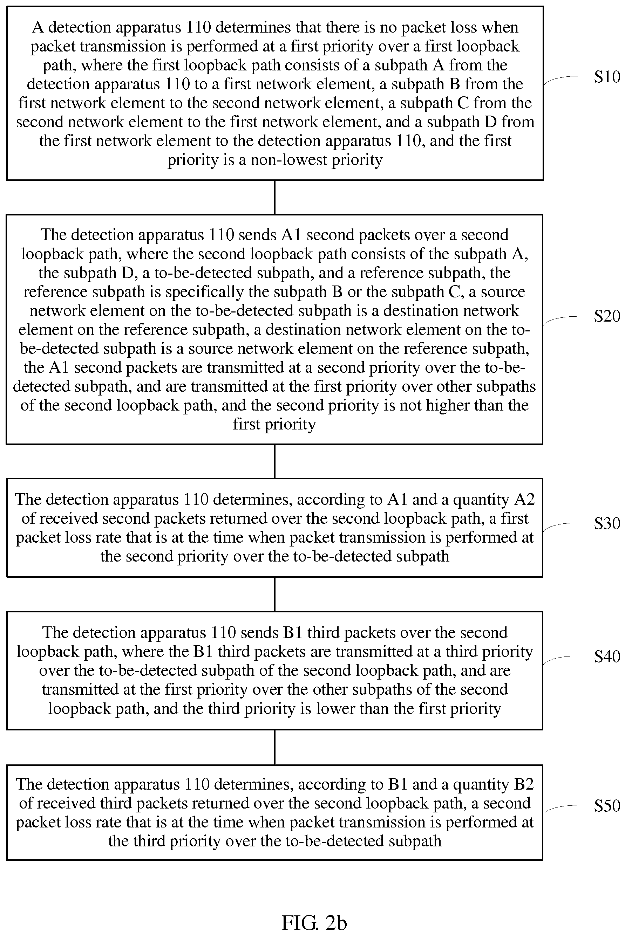

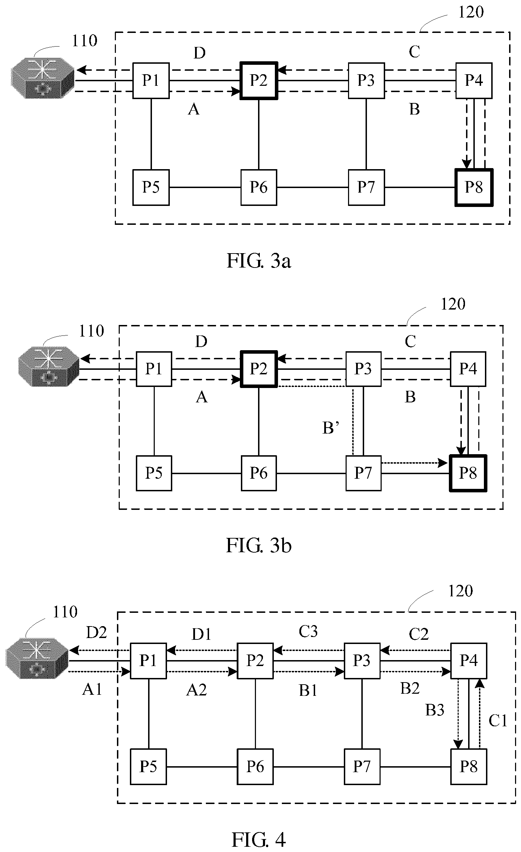

With reference to FIG. 2a-1, FIG. 2a-2, FIG. 3a, and FIG. 3b, the following describes a specific implementation method 100 for detecting a packet loss rate between two network elements (which are subsequently referred to as a first network element and a second network element respectively, for example, a network element P2 and a network element P8) in a communications network. With reference to FIG. 2b, FIG. 3a, and FIG. 3b, the following describes a specific implementation method 200 for detecting a packet loss rate between two network elements (which are subsequently referred to as a first network element and a second network element respectively, for example, a network element P2 and a network element P8) in a communications network.

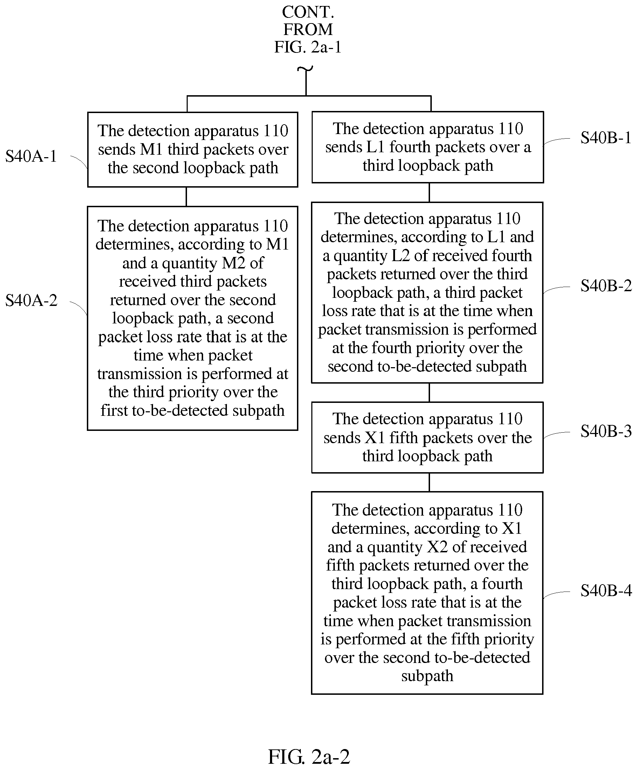

As shown in FIG. 2a-1 and FIG. 2a-2, the method 100 includes the following steps.

S10: A detection apparatus 110 determines that there is no packet loss when packet transmission is performed at a first priority over a first loopback path, where the first loopback path consists of a subpath A from the detection apparatus 110 to a first network element and a subpath D from the first network element to the detection apparatus 110, and the first priority is a non-lowest priority.

Specifically, the detection apparatus 110 may first determine the first loopback path by using a path determining apparatus and according to a network topology of the communications network. The path determining apparatus may be specifically a software-defined networking (English: software-defined networking, SDN for short) controller. During specific implementation, the path determining apparatus and the detection apparatus 110 may be implemented in a same physical device, or may be implemented in different physical devices.

As shown in FIG. 3a and FIG. 3b, P2 is the first network element, and the first loopback path consists of the subpath A and the subpath D that are shown by dashed lines. Network elements on the subpath A are successively the detection apparatus 110, a network element P1, and the network element P2, and network elements on the subpath D are successively the network element P2, the network element P1, and the detection apparatus 110.

The first priority is a non-lowest priority, and is preferably a highest priority. The first priority is not a lowest priority, and when transmitting the packet at the first priority, a network element (for example, the network element P1) that receives the packet preferentially sends the packet to be transmitted at the first priority instead of a packet to be transmitted at a lowest priority. Therefore, if congestion occurs, the packet to be transmitted at the lowest priority is generally discarded, but a packet to be transmitted at a non-lowest priority is generally not discarded, and therefore, congestion-based packet loss generally does not occur when packet transmission is performed at the first priority.

It may be understood that, a higher first priority indicates a lower probability that congestion-based packet loss occurs when packet transmission is performed at the first priority. When the first priority is a highest priority, it may be considered that a probability that congestion-based packet loss occurs when packet transmission is performed at the first priority is 0.

Step S10 may be specifically implemented in the following implementation manners.

In a first implementation manner, the detection apparatus 110 sends Z first packets over the first loopback path, where the Z first packets are transmitted at a probe priority over the first loopback path, the probe priority is lower than or equal to the first priority, and Z is a positive integer and is generally greater than or equal to 2; and when receiving the Z first packets returned over the first loopback path, further determines that there is no packet loss when packet transmission is performed at the first priority over the first loopback path. Each first packet may specifically include routing information of the first loopback path, and the routing information of the first loopback path is used to instruct a network element on the first loopback path to route the first packet along the first loopback path; and each first packet further includes priority information, and the priority information in the first packet is used to instruct the network element on the first loopback path to transmit the first packet at the probe priority over the first loopback path.

In the foregoing implementation manner, if the Z first packets returned over the first loopback path may be received when the probe priority is lower than the first priority, it indicates that there is no packet loss when packet transmission is performed at a priority lower than the first priority over the first loopback path, and it may be considered that there is no packet loss either when packet transmission is performed at the first priority over the first loopback path.

It should be noted that, "first", "second", and "third" in the first packet in the method 100 and a second packet and a third packet that are subsequently used in the method 100 are merely used to distinguish packets used in different detection processes, but do not indicate that there is a sequence, a hierarchy, or other dependency between these packets.

In a second implementation manner, if the detection apparatus 110 is directly connected to the first network element, for example, as shown in FIG. 1, the first network element is the network element P1, in step S10, the detection apparatus 110 may perform the determining in a manner of ping. Specifically, the detection apparatus 110 sends an Internet Control Message Protocol (English: Internet Control Message Protocol, ICMP for short) request packet to the first network element, and if an ICMP response packet returned by the first network element is received, it indicates that there is no fault on the detection apparatus, the first network element, and a link (that is, the first loopback path) between the detection apparatus and the first network element. Therefore, it may be accordingly determined that there is no fault-based packet loss when packet transmission is performed over the first loopback path. In addition, because congestion-based packet loss generally does not occur when packet transmission is performed at the first priority, it may be accordingly determined that there is no packet loss when packet transmission is performed at the first priority over the first loopback path.

S20: The detection apparatus 110 sends N1 second packets over a second loopback path, where N1 is a positive integer and is generally greater than or equal to 2, the second loopback path consists of the subpath A from the detection apparatus 110 to the first network element, a subpath B from the first network element to a second network element, a subpath C from the second network element to the first network element, and the subpath D from the first network element to the detection apparatus 110, the N1 second packets are transmitted at the first priority over the subpath A and the subpath D, and are transmitted at a second priority over the subpath B and the subpath C, and the second priority is not higher than the first priority.

Each second packet may specifically include routing information of the second loopback path, and the routing information of the second loopback path is used to instruct a network element on the second loopback path to route the second packet along the second loopback path; and each second packet further includes priority information, and the priority information in the second packet is used to instruct the network element on the second loopback path to transmit the second packet at the first priority over the subpath A and the subpath D, and transmit the second packet at the second priority over the subpath B and the subpath C.

Specifically, the subpath B and the subpath C may be determined by the detection apparatus 110 by using the path determining apparatus and according to the network topology of the communications network, or may be entered by a user. As shown in FIG. 3, P2 is the first network element, P8 is the second network element, and the second loopback path consists of the subpath A, the subpath B, the subpath C, and the subpath D that are shown by dashed lines. Network elements on the subpath B are successively the network element P2, a network element P3, a network element P4, and the network element P8, and network elements on the subpath C are successively the network element P8, the network element P4, the network element P3, and the network element P2.

The second priority may be specifically equal to the first priority, for example, both the first priority and the second priority are a highest priority; or may be lower than the first priority, for example, the first priority is a highest priority, and the second priority is a lowest priority.

S30: The detection apparatus 110 determines a first packet loss rate between the first network element and the second network element according to N1 and a quantity N2 of received second packets returned over the second loopback path, where N2 is generally less than or equal to N1.

The first packet loss rate may be specifically determined as (N1-N2)/N1.

The first priority is not a lowest priority, and when transmitting the packet at the first priority, a network element (for example, the network element P1) that receives the packet preferentially sends the packet to be transmitted at the first priority instead of a packet to be transmitted at a lowest priority. Therefore, if congestion occurs, the packet to be transmitted at the lowest priority is generally discarded, but a packet to be transmitted at a non-lowest priority is generally not discarded, and therefore, congestion-based packet loss generally does not occur when packet transmission is performed at the first priority. A packet loss rate that is at the time when packet transmission is successively performed at the first priority over a same path generally does not vary with a congestion status, and therefore, if it is determined, by using step S10, that there is no packet loss when packet transmission is performed at the first priority over the first loopback path, it may be considered that there is no packet loss either when packet transmission is performed at the first priority over the subpath A and the subpath D of the second loopback path. Therefore, the packet loss rate between the first network element and the second network element may be determined according to the quantity of sent second packets and the quantity of received second packets returned over the second loopback path.

If the second priority is equal to the first priority (for example, when both are a highest priority), the determined first packet loss rate is generally not affected by congestion-based packet loss, and reflects fault-based packet loss. Therefore, the determined first packet loss rate may be referred to as a fault-based packet loss rate, which is generally 0 or 100%. If the fault-based packet loss rate is 100%, it indicates that there is a fault on a network element or a link between the first network element and the second network element, or on the second network element. If the detected fault-based packet loss rate is 100%, a network element (for example, the network element P3) between the first network element and the second network element may be further used as a new second network element to further detect the fault-based packet loss rate by using steps S10 to S30, so as to determine a location at which the fault occurs.

In an actual communication process, packet transmission is generally performed at a non-highest priority in the communications network. Therefore, when the second priority is lower than the first priority (for example, the first priority is a highest priority, and the second priority is a lowest priority), the determined first packet loss rate may reflect an actual network packet loss rate, and therefore, may be referred to as a common packet loss rate. The common packet loss rate may be 0, 100%, or any numeric value between 0 and 100%. If the common packet loss rate is 100%, it indicates that there is a fault on a network element or a link between the first network element and the second network element, or on the second network element. If the common packet loss rate is any numeric value between 0 and 100%, it indicates that there is congestion-based packet loss. If the common packet loss rate is 0, it indicates that there is neither a fault nor congestion-based packet loss.

If there are multiple transmission paths between the first network element and the second network element, for example, if the first network element may send a packet to the second network element over the subpath B and a subpath X, and the second network element may send a packet to the first network element over the subpath C and a subpath Y, the detection apparatus 110 may separately determine loopback paths A -> B -> Y -> D, A -> X -> C -> D, and A -> X -> Y -> D, and separately determine, by performing steps S10 to S30, packet loss rates that is at the time when packet transmission is performed over different paths between the first network element and the second network element.

In conclusion, according to the method 100 in the first embodiment of the present invention, a detection apparatus is connected to a network element in a communications network, and therefore, a packet loss rate between any two network elements (that is, a first network element and a second network element) in the communications network may be detected by performing steps S10 to S30, without a need to implement a detection function on a detected network element, thereby resolving a prior-art problem of relatively complex implementation and relatively high actual deployment costs.

When the second priority is equal to the first priority, if the first packet loss rate detected by using steps S10 to S30 is 0 (that is, there is no fault-based packet loss), a congestion-based packet loss rate between the first network element and the second network element may be further detected by using steps S40A-1 and S40A-2.

S40A-1: The detection apparatus 110 sends M1 third packets over the second loopback path, where M1 is a positive integer and is generally greater than or equal to 2, the M1 third packets are transmitted at a third priority over a first to-be-detected subpath of the second loopback path, and are transmitted at the first priority over other subpaths of the second loopback path, the first to-be-detected subpath is specifically the subpath B and/or the subpath C, and the third priority is lower than the first priority.

Each third packet may specifically include routing information of the second loopback path, and the routing information of the second loopback path is used to instruct the network element on the second loopback path to route the third packet along the second loopback path; and each third packet further includes priority information, and the priority information in the third packet is used to instruct the network element on the second loopback path to transmit the third packet at the third priority over the first to-be-detected subpath, and transmit the third packet at the first priority over the other subpaths of the second loopback path.

S40A-2: The detection apparatus 110 determines, according to M1 and a quantity M2 of received third packets returned over the second loopback path, a second packet loss rate that is at the time when packet transmission is performed at the third priority over the first to-be-detected subpath.

The second packet loss rate may be specifically determined as (M1-M2)/M1.

Because the second packet loss rate is detected on the premise that it is determined that there is no fault-based packet loss between the first network element and the second network element, the second packet loss rate may be considered as a congestion-based packet loss rate on the first to-be-detected subpath (for example, the subpath B, or the subpath B and the subpath C). If the detected congestion-based packet loss rate is relatively high (for example, the detected congestion-based packet loss rate exceeds a specified threshold), a network element (for example, the network element P3) between the first network element and the second network element may be further used as a new second network element to further detect the congestion-based packet loss rate by using steps S10 to S40A-2, so as to determine a location at which congestion occurs.

If there are multiple transmission paths between the first network element and the second network element, for example, if the first network element may send a packet to the second network element over the subpath B and the subpath X, and the second network element may send a packet to the first network element over the subpath C and the subpath Y, the detection apparatus 110 may further determine loopback paths A -> X -> Y -> D and A -> X -> C -> D, and determine, by performing steps S10 to S40A-2, a first packet loss rate (i.e. a common packet loss rate) and a second packet loss rate (i.e. a congestion-based packet loss rate) that is at the time when packet transmission is performed over different paths between the first network element and the second network element.

In addition, when the second priority is equal to the first priority, if the first packet loss rate detected by using steps S10 to S30 is 0 (that is, there is no fault-based packet loss), a congestion-based packet loss rate between the first network element and the second network element may be further detected by using steps S40B-1 and S40B-2.

S40B-1: The detection apparatus 110 sends L1 fourth packets over a third loopback path, where the third loopback path consists of the subpath A, the subpath D, a second to-be-detected subpath, and a reference subpath, the reference subpath is specifically the subpath B or the subpath C, a source network element on the second to-be-detected subpath is a destination network element on the reference subpath, a destination network element on the second to-be-detected subpath is a source network element on the reference subpath, the L1 fourth packets are transmitted at a fourth priority over the second to-be-detected subpath, and are transmitted at the first priority over other subpaths of the third loopback path, and the fourth priority is not higher than the first priority.

It should be noted that, in this embodiment of the present invention, for a subpath from a particular network element to another network element, the particular network element is a source network element on the subpath, and the another network element is a destination network element on the subpath. For example, for the subpath A from the detection apparatus 110 to the first network element, the detection apparatus 110 is a source network element on the subpath A, and the first network element is a destination network element on the subpath A.

In a case in which the reference subpath is the subpath B, the source network element on the reference subpath is specifically the first network element, and the destination network element on the reference subpath is specifically the second network element. Accordingly, the source network element on the second to-be-detected subpath is the second network element, and the destination network element on the second to-be-detected subpath is the first network element.

In another case in which the reference subpath is the subpath C, the source network element on the reference subpath is specifically the second network element, and the destination network element on the reference subpath is specifically the first network element. Accordingly, the source network element on the second to-be-detected subpath is the first network element, and the destination network element on the second to-be-detected subpath is the second network element.

As shown in FIG. 3b, if the reference subpath is the subpath C, the source network element on the reference subpath is the network element P8, and the destination network element on the reference subpath is the network element P2. Accordingly, the second to-be-detected subpath may be any path such as the subpath B or a subpath B' from the network element P2 to the network element P8. The source network element on the second to-be-detected subpath is P2, and the destination network element on the second to-be-detected subpath is P8.

S40B-2: The detection apparatus 110 determines, according to L1 and a quantity L2 of received fourth packets returned over the third loopback path, a third packet loss rate that is at the time when packet transmission is performed at the fourth priority over the second to-be-detected subpath.

The fourth priority may be equal to the first priority, for example, both the first priority and the fourth priority are a highest priority; or may be lower than the first priority, for example, the first priority is a highest priority, and the fourth priority is a lowest priority.

Further, when the fourth priority is equal to the first priority, if the third packet loss rate detected by using steps S40B-1 and S40B-2 is 0 (that is, there is no fault-based packet loss), a congestion-based packet loss rate that is at the time when packet transmission is performed by the first network element and the second network element over the second to-be-detected subpath may be further detected by using steps S40B-3 and S40B-4.

S40B-3: The detection apparatus 110 sends XI fifth packets over the third loopback path, where XI is a positive integer and is generally greater than or equal to 2, the XI fifth packets are transmitted at a fifth priority over the second to-be-detected subpath of the third loopback path, and are transmitted at the first priority over the other subpaths of the third loopback path, and the fifth priority is lower than the first priority.

Each fifth packet may specifically include routing information of the third loopback path, and the routing information of the third loopback path is used to instruct a network element on the third loopback path to route the fifth packet along the third loopback path; and each fifth packet further includes priority information, and the priority information in the fifth packet is used to instruct the network element on the third loopback path to transmit the fifth packet at the fifth priority over the second to-be-detected subpath, and transmit the fifth packet at the first priority over the other subpaths of the third loopback path.

S40B-4: The detection apparatus 110 determines, according to XI and a quantity X2 of received fifth packets returned over the third loopback path, a fourth packet loss rate that is at the time when packet transmission is performed at the fifth priority over the second to-be-detected subpath.

With reference to FIG. 2b, FIG. 3a, and FIG. 3b, the following describes a specific implementation method 200 for detecting a packet loss rate between two network elements (which are subsequently referred to as a first network element and a second network element respectively, for example, a network element P2 and a network element P8) in a communications network.

It should be noted that, "first" and "second" in a first packet in the method 200 and a second packet and a third packet that are subsequently used in the method 200 are merely used to distinguish packets used in different detection processes in the method 200, but do not indicate that there is a sequence, a hierarchy, or other dependency between these packets.

As shown in FIG. 2b, the method 200 includes the following steps.

S10: A detection apparatus 110 determines that there is no packet loss when packet transmission is performed at a first priority over a first loopback path, where the first loopback path consists of a subpath A from the detection apparatus 110 to a first network element, a subpath B from the first network element to a second network element, a subpath C from the second network element to the first network element, and a subpath D from the first network element to the detection apparatus 110, and the first priority is a non-lowest priority.

The first priority is preferably a highest priority.

Step S10 may be specifically implemented in the following implementation manners.

The detection apparatus 110 sends B first packets over the first loopback path, where the B first packets are transmitted at a probe priority over the first loopback path, the probe priority is lower than or equal to the first priority, and B is a positive integer and is generally greater than or equal to 2; and when receiving the B first packets returned over the first loopback path, further determines that there is no packet loss when packet transmission is performed at the first priority over the first loopback path.

During specific implementation, each first packet may include routing information of the first loopback path, and the routing information of the first loopback path is used to instruct a network element on the first loopback path to route the first packet along the first loopback path; and the first packet further includes priority information, and the priority information in the first packet is used to instruct the network element on the first loopback path to transmit the first packet at the probe priority over the first loopback path.

S20: The detection apparatus 110 sends A1 second packets over a second loopback path, where A1 is a positive integer and is generally greater than or equal to 2, the second loopback path consists of the subpath A, the subpath D, a to-be-detected subpath, and a reference subpath, the reference subpath is specifically the subpath B or the subpath C, a source network element on the to-be-detected subpath is a destination network element on the reference subpath, a destination network element on the to-be-detected subpath is a source network element on the reference subpath, the A1 second packets are transmitted at a second priority over the to-be-detected subpath, and are transmitted at the first priority over other subpaths of the second loopback path, and the second priority is not higher than the first priority.

The second priority may be specifically equal to the first priority, for example, both the first priority and the second priority are a highest priority; or may be lower than the first priority, for example, the first priority is a highest priority, and the second priority is a lowest priority.

S30: The detection apparatus 110 determines, according to A1 and a quantity A2 of received second packets returned over the second loopback path, a first packet loss rate that is at the time when packet transmission is performed at the second priority over the to-be-detected subpath.

During specific implementation, each second packet includes routing information of the second loopback path, and the routing information of the second loopback path is used to instruct a network element on the second loopback path to route the second packet along the second loopback path; and the second packet further includes priority information, and the priority information in the second packet is used to instruct the network element on the second loopback path to transmit the second packet at the first priority over the other subpaths of the second loopback path, and transmit the second packet at the second priority over the to-be-detected subpath.

Further, when the second priority is equal to the first priority, if the first packet loss rate detected by using steps S10 to S30 of the method 200 is 0 (that is, there is no fault-based packet loss), a congestion-based packet loss rate that is at the time when packet transmission is performed by the first network element and the second network element over the to-be-detected subpath may be further detected by using steps S40 and S50.

S40: The detection apparatus 110 sends B1 third packets over the second loopback path, where B1 is a positive integer and is generally greater than or equal to 2, the B1 third packets are transmitted at a third priority over the to-be-detected subpath of the second loopback path, and are transmitted at the first priority over the other subpaths of the second loopback path, and the third priority is lower than the first priority.

Each third packet may specifically include routing information of the second loopback path, and the routing information of the second loopback path is used to instruct the network element on the second loopback path to route the third packet along the second loopback path; and each third packet further includes priority information, and the priority information in the third packet is used to instruct the network element on the second loopback path to transmit the third packet at the third priority over the to-be-detected subpath, and transmit the third packet at the first priority over the other subpaths of the second loopback path.

S50: The detection apparatus 110 determines, according to B1 and a quantity B2 of received third packets returned over the second loopback path, a second packet loss rate that is at the time when packet transmission is performed at the third priority over the to-be-detected subpath.

According to the method 200 in the first embodiment of the present invention, a packet loss rate between any two network elements (that is, a first network element and a second network element) in the communications network can be detected only by implementing a detection function on a detection apparatus, without a need to implement the detection function on a detected network element, thereby resolving a prior-art problem of relatively complex implementation and relatively high actual deployment costs.

In addition, according to the solution provided in the background of the present invention, during packet loss rate detection, a time at which a packet leaves a network element is used as a start point to detect a packet loss rate, a packet discarded on this network element due to congestion is not taken into consideration, and therefore, the detected packet loss rate is not accurate. In contrast, during packet loss detection in the solutions of this patent, a time at which a packet arrives at a source network element on a to-be-detected subpath is used as a start point to detect a packet loss rate, a packet discarded on this network element due to congestion is taken into consideration, and therefore, the detected packet loss rate is more accurate.

Further, the first packet to the fifth packet in the method 100 and the first packet to the third packet in the method 200 may be specifically transmitted at a segment routing (English: segment routing, SR for short) technology.

For ease of brief description, any loopback path in the method 100 and the method 200 is subsequently referred to as a target loopback path, and a packet transmitted over the target loopback path is referred to as a target packet. In the method 100, when the target packet is the first packet, the target loopback path is specifically the first loopback path; when the target packet is the second packet or the third packet, the target loopback path is specifically the second loopback path; when the target packet is the fourth packet or the fifth packet, the target loopback path is specifically the third loopback path. In the method 200, when the target packet is the first packet, the target loopback path is specifically the first loopback path; when the target packet is the second packet or the third packet, the target loopback path is specifically the second loopback path.

During implementation by using the segment routing technology, the target packet (for example, the second packet in the method 100) specifically includes identifiers of all segments (English: segment) arranged in the target loopback path (for example, the second loopback path in the method 100) according to a routing sequence and a priority for transmitting the target packet over each segment. In an example of the second loopback path in the method 100, as shown in FIG. 4, according to a routing sequence, all segments of the second loopback path in the method 100 are successively: A1 -> A2 -> B1 -> B2 -> B3 -> C1 -> C2 -> C3 -> D1 -> D2.

When receiving the target packet, a source network element in each segment routes, at a priority for the corresponding segment, the target packet to a destination network element on the corresponding segment. For example, in the method 100, when receiving the second packet sent by the detection apparatus 110, a source network element P1 in a segment A2 routes, at the first priority, the second packet to a destination network element P2 in the segment A2.

The identifier of the segment may be specifically an egress port number of a source network element on the segment, or may be an identifier of a destination network element on the segment. In implementation solutions of this patent, the identifier of the segment is preferably the egress port number of the source network element on the segment.

Further, the foregoing implementation manners may be specifically implemented by using a Multiprotocol Label Switching (English: Multiprotocol Label Switching, MPLS for short)-based SR technology.

In an MPLS network, data is forwarded by using a label in a packet header. A path that a packet passes through in the MPLS network is referred to as a label switched path (label switched path, LSP for short), and is a unidirectional path.

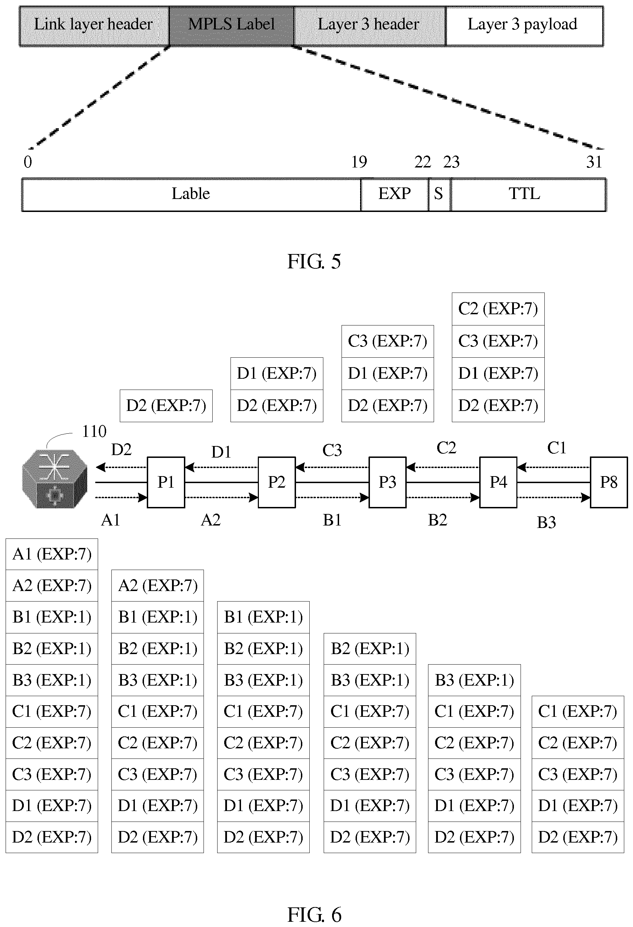

As shown in FIG. 5, a packet header includes an MPLS label header, and the MPLS label header includes four fields. A label field is used to carry an identifier of a segment, and an EXP field may be used to carry a priority of a packet. By assigning different EXP values to labels in a label stack, it may be ensured that a packet is transmitted at a corresponding priority over each segment of an LSP. When a packet is routed according to a label stack of the packet, the packet is transmitted at different priorities over two adjacent segments. Such packet priority change is referred to as color change, and a network element on which color change occurs is referred to as a color change point.

In the MPLS network, a packet may carry multiple labels, and these labels exist in a form of a "stack", and constitute a label stack. A network element that receives a packet determines, according to a topmost label, how to forward the packet.

During SR implementation in the MPLS network, two types of segments are defined: a node (English: node) segment and an adjacency (English: adjacency) segment. Both the two types of segments are represented by using an MPLS label. A label corresponding to the node segment is referred to as a node label, and a label corresponding to the adjacency segment is referred to as a link label.

For the node label, a node label is allocated to each network element in a network, and the node label is globally unique in an Interior Gateway Protocol (English: Interior Gateway Protocol, IGP for short) domain. When a particular network element receives a packet, if a topmost label in a label stack of the packet is a node label, the network element routes the packet along a shortest path to a network element corresponding to the node label.

For the link label, each network element in a network allocates a link label to each egress port of the network element. When a particular network element receives a packet, if a topmost label in a label stack of the packet is a link label, the network element directly forwards the packet through an egress port identified by the link label.

During implementation of the foregoing implementation manners by using the MPLS-based SR technology, the detection apparatus 110 adds an MPLS label (including an identifier of each segment and a priority) of each segment of the target loopback path to a label stack of the target packet. Each network element on the target loopback path processes a label, in the label stack, of a segment in which the network element is used as a source network element, so as to send the target packet over the segment according to a priority for the segment. Specifically, according to a topmost label, the detection apparatus 110 sends, at a priority in the topmost label, the target packet to a destination network element (for example, the network element P1) in a segment corresponding to the topmost label. When subsequently receiving the target packet, each network element (for example, the network element P1) in the target loopback path pops up the topmost label in the label stack of the target packet, and sends, at a priority in a current topmost label, the target packet to a destination network element (for example, the network element P2) in a segment corresponding to the current topmost label.

With reference to FIG. 6, the following describes a process of transmitting the third packet over the second loopback path in the method 100.

The detection apparatus 110 adds an MPLS label (including an identifier of each segment and a priority) of each segment of the second loopback path to a label stack of the target packet. As shown in FIG. 6, EXP:7 represents a highest priority, and EXP: 1 represents a lowest priority. According to the label stack, it can be learned that, the third packet is transmitted at different priorities over paths that are before and after a source network element (for example, the network element P2) in a to-be-detected subpath (for example, the subpath B), and is also transmitted at different priorities over paths that are before and after a destination network element (for example, the network element P8) in the to-be-detected subpath. That is, the third packet has color change on the source network element and the destination network element on the to-be-detected subpath, and the source network element and the destination network element on the to-be-detected subpath are color change points.

The detection apparatus 110 determines an egress port for the third packet according to segment identification information A1 in a topmost label, and transmits, a priority 7 according to segment priority information "EXP:7" in the topmost label, the third packet to the network element P1 through the determined egress port.

After receiving the third packet, the network element P1 pops up a topmost label "A2(EXP:7)" in the third packet; determines an egress port for the third packet according to segment identification information A2 in a current topmost label; and transmits, at a priority 7 according to segment priority information "EXP:7" in the topmost label, the third packet to the network element P2 through the determined egress port.

The third packet is subsequently transmitted back to the detection apparatus 110 by means of successive routing by P2, P3, P4, P8, P4, P3, P2, and P1. A subsequent routing process is similar to the foregoing process, and details are not described herein again.

It should be noted that, in the foregoing process, a network element that forwards a packet by using a topmost label does not delete the used topmost label. Instead, a next network element that receives the packet first pops up the topmost label used by the network element, and forwards the packet according to a current topmost label obtained after a pop-up operation is performed. During specific implementation, alternatively, each network element that forwards a packet by using a topmost label may delete the used topmost label before forwarding. Accordingly, a next network element may directly forward the packet according to a topmost label, and delete the used topmost label before forwarding.

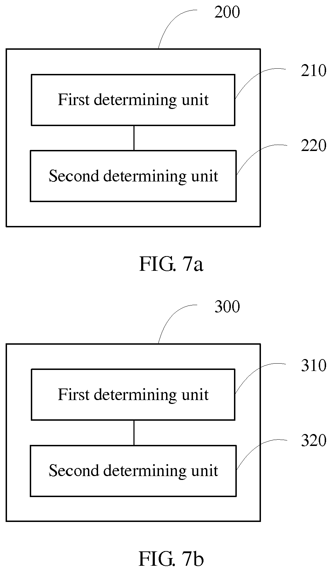

According to the method 100 in the first embodiment of the present invention, a second embodiment of the present invention provides a detection apparatus 200. As shown in FIG. 7a, the detection apparatus 200 includes a first determining unit 210 and a second determining unit 220.

The first determining unit 210 is configured to determine that there is no packet loss when packet transmission is performed at a first priority over a first loopback path, where the first loopback path consists of a first subpath (for example, the subpath A shown in FIG. 3a) from the detection apparatus to a first network element in a communications network and a second subpath (for example, the subpath D shown in FIG. 3a) from the first network element to the detection apparatus, and the first priority is a non-lowest priority, and is preferably a highest priority.

The second determining unit 220 is configured to: send N1 second packets over a second loopback path, where the second loopback path consists of the first subpath, a third subpath (for example, the subpath B shown in FIG. 3a) from the first network element to a second network element in the communications network, a fourth subpath (for example, the subpath C shown in FIG. 3a) from the second network element to the first network element, and the second subpath, the N1 second packets are transmitted at the first priority over the first subpath and the second subpath, and are transmitted at a second priority over the third subpath and the fourth subpath, and the second priority is not higher than the first priority; and determine a first packet loss rate between the first network element and the second network element according to N1 and a quantity N2 of received second packets returned over the second loopback path.

During specific implementation, the second priority may be equal to the first priority.

On the premise that the second priority is equal to the first priority, further, in a specific implementation manner, the second determining unit 220 may be further configured to: when the determined first packet loss rate is 0, send M1 third packets over the second loopback path, where the M1 third packets are transmitted at a third priority over a first to-be-detected subpath of the second loopback path, and are transmitted at the first priority over other subpaths of the second loopback path, the first to-be-detected subpath specifically includes at least one of the third subpath or the fourth subpath, and the third priority is lower than the first priority; and determine, according to M1 and a quantity M2 of received third packets returned over the second loopback path, a second packet loss rate that is at the time when packet transmission is performed at the third priority over the first to-be-detected subpath.

On the premise that the second priority is equal to the first priority, further, in another specific implementation manner, the second determining unit 220 may be further configured to: when the determined first packet loss rate is 0, send L1 fourth packets over a third loopback path, where the third loopback path consists of the first subpath, the second subpath, a second to-be-detected subpath, and a reference subpath, the reference subpath is specifically the third subpath or the fourth subpath, a source network element on the second to-be-detected subpath is a destination network element on the reference subpath, a destination network element on the second to-be-detected subpath is a source network element on the reference subpath, the L1 fourth packets are transmitted at a fourth priority over the second to-be-detected subpath, and are transmitted at the first priority over other subpaths of the third loopback path, and the fourth priority is not higher than the first priority; and determine, according to L1 and a quantity L2 of received fourth packets returned over the third loopback path, a third packet loss rate that is at the time when packet transmission is performed at the fourth priority over the second to-be-detected subpath.

Functional units described in the second embodiment of the present invention may be configured to implement operations performed by the detection apparatus 110 in the method 100 described in the foregoing first embodiment. Specifically, the first determining unit 210 may be configured to implement step S10 performed by the detection apparatus 110 in the method 100 described in the foregoing first embodiment; and the second determining unit 220 may be configured to implement steps S20 and S30, S40A-1 and S40A-2, and S40B-1 to S40B-4 that are performed by the detection apparatus 110 in the method 100 described in the foregoing first embodiment.

According to the method 200 in the first embodiment of the present invention, a third embodiment of the present invention provides a detection apparatus 300. As shown in FIG. 7b, the detection apparatus 300 includes a first determining unit 310 and a second determining unit 320.

The first determining unit 310 is configured to determine that there is no packet loss when packet transmission is performed at a first priority over a first loopback path, where the first loopback path consists of a first subpath (for example, the subpath A shown in FIG. 3a) from the detection apparatus to a first network element in a communications network, a second subpath (for example, the subpath B shown in FIG. 3a) from the first network element to a second network element in the communications network, a third subpath (for example, the subpath C shown in FIG. 3a) from the second network element to the first network element, and a fourth subpath (for example, the subpath D shown in FIG. 3a) from the first network element to the detection apparatus, and the first priority is a non-lowest priority.

The second determining unit 320 is configured to: send A1 second packets over a second loopback path, where the second loopback path consists of the first subpath, the fourth subpath, a to-be-detected subpath, and a reference subpath, the reference subpath is specifically the second subpath or the third subpath, a source network element on the to-be-detected subpath is a destination network element on the reference subpath, a destination network element on the to-be-detected subpath is a source network element on the reference subpath, the A1 second packets are transmitted at a second priority over the to-be-detected subpath, and are transmitted at the first priority over other subpaths of the second loopback path, and the second priority is not higher than the first priority; and determine, according to A1 and a quantity A2 of received second packets returned over the second loopback path, a packet loss rate that is at the time when packet transmission is performed at the second priority over the to-be-detected subpath.

Functional units described in the third embodiment of the present invention may be configured to implement operations performed by the detection apparatus 110 in the method 200 described in the foregoing first embodiment. Specifically, the first determining unit 310 may be configured to implement step S10 performed by the detection apparatus 110 in the method 200 described in the foregoing first embodiment; and the second determining unit 320 may be configured to implement steps S20 to S50 that are performed by the detection apparatus 110 in the method 200 described in the foregoing first embodiment.

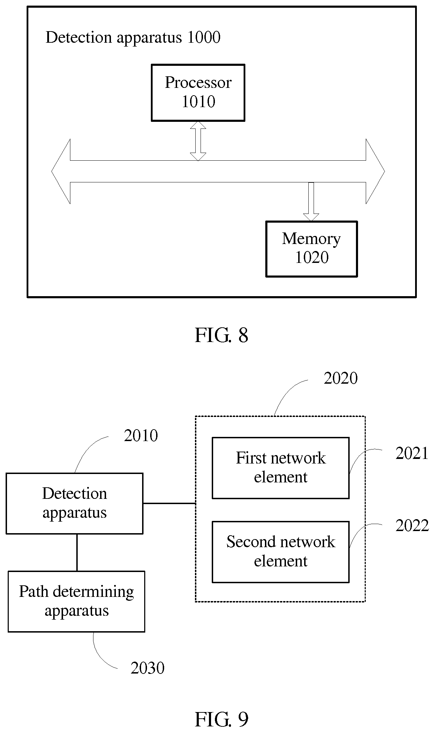

According to the first embodiment of the present invention, a fourth embodiment of the present invention provides a detection apparatus 1000. As shown in FIG. 8, the detection apparatus 1000 includes a processor 1010 and a memory 1020, and the processor 1010 and the memory 1020 complete mutual communication by using a bus.

The memory 1020 is configured to store a computer operation instruction, and may be specifically a high-speed RAM, or may be a non-volatile memory (English: non-volatile memory).

The processor 1010 is configured to execute the computer operation instruction stored in the memory 1020. The processor 1010 may be specifically a central processing unit (English: central processing unit, CPU for short), or an application-specific integrated circuit (English: application-specific integrated circuit, ASIC for short), or one or more integrated circuits configured to implement the embodiments of the present invention.

The processor 1010 executes the computer operation instruction, so that the detection apparatus 1000 performs operations performed by the detection apparatus 110 in the method 100 or the method 200 described in the foregoing first embodiment.

According to the detection apparatus 200, the detection apparatus 300, and the detection apparatus 1000 provided in the second to the fourth embodiments of the present invention, a packet loss rate between any two network elements (that is, a first network element and a second network element) in the communications network can be detected only by implementing a detection function on a detection apparatus, without a need to implement the detection function on a detected network element, thereby resolving a prior-art problem of relatively complex implementation and relatively high actual deployment costs because the detection function is required on each detected network element.

According to the first embodiment of the present invention, a fifth embodiment of the present invention provides a detection system 2000. As shown in FIG. 9, the detection system 2000 includes a detection apparatus 2010 and a communications network 2020. The communications network 2020 includes a first network element 2021 and a second network element 2022. The detection apparatus 2010 is connected to any network element (for example, the first network element 2021) in the communications network 2020.

The detection apparatus 2010 may be specifically the detection apparatus 200 provided in the second embodiment, the detection apparatus 300 provided in the third embodiment, or the detection apparatus 1000 provided in the fourth embodiment.

Further, the detection system 2000 may further include a path determining apparatus 2030. The detection apparatus 2010 may be further configured to determine the first loopback path, the second loopback path, and/or the third loopback path by using the path determining apparatus 2030. The path determining apparatus 2030 may be specifically an SDN controller. During specific implementation, the path determining apparatus 2030 and the detection apparatus 2010 may be implemented in a same physical device, or may be implemented in different physical devices.

According to the detection system 2000 provided in the fifth embodiment of the present invention, a packet loss rate between any two network elements (that is, a first network element 2021 and a second network element 2022) in a communications network 2020 can be detected only by implementing a detection function on a detection apparatus 2010, without a need to implement the detection function on a detected network element, thereby resolving a prior-art problem of relatively complex implementation and relatively high actual deployment costs because the detection function is required on each detected network element.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium and includes several instructions for instructing a computer network element (which may be a personal computer, a server, or a network element) to perform all or some of the steps of the methods described in the embodiments of the present invention. The foregoing storage medium includes: any medium that can store program code, such as a USB flash drive, a removable hard disk, a read-only memory (English: read-only memory, ROM for short), a random access memory (English: random access memory, RAM for short), a magnetic disk, or an optical disc.

The foregoing descriptions are merely specific implementation manners of the present invention, but many modifications and variations of the above embodiments may be made without departing from the scope of the invention as defined by the appended claims.

## Claims

1. A method for implementing packet loss detection, wherein the method comprises:
determining (S10), by a detection apparatus, that there is no packet loss when packet transmission is performed at a first priority over a first loopback path, wherein the first loopback path consists of a first subpath from the detection apparatus to a first network element in a communications network and a second subpath from the first network element to the detection apparatus, and the first priority is a non-lowest priority;
sending (S20), by the detection apparatus, N1 first packets over a second loopback path, wherein the second loopback path consists of the first subpath, a third subpath from the first network element to a second network element in the communications network, a fourth subpath from the second network element to the first network element, and the second subpath, the N1 first packets are transmitted at the first priority over the first subpath and the second subpath, and are transmitted at a second priority over the third subpath and the fourth subpath, and the second priority is not higher than the first priority, wherein each first packet comprises routing information of the second loopback path, and the routing information of the second loopback path is used to instruct a network element on the second loopback path to route the first packet along the second loopback path; and the first packet further comprises priority information, and the priority information in the first packet is used to instruct the network element on the second loopback path to transmit the first packet at the first priority over the first subpath and the second subpath, and transmit the first packet at the second priority over the third subpath and the fourth subpath; and
determining (S30), by the detection apparatus, a first packet loss rate between the first network element and the second network element according to N1 and a quantity N2 of received first packets returned over the second loopback path;
wherein the determining, by a detection apparatus, that there is no packet loss when packet transmission is performed at a first priority over a first loopback path specifically comprises:
sending, by the detection apparatus, Z second packets over the first loopback path, wherein the Z second packets are transmitted at a probe priority over the first loopback path, and the probe priority is lower than or equal to the first priority; and
when receiving the Z second packets returned over the first loopback path, determining, by the detection apparatus, that there is no packet loss when packet transmission is performed at the first priority over the first loopback path.

2. The method according to claim 1, wherein the first priority is the highest priority in the communication network.

3. The method according to any one of claims 1 to 2, wherein the second priority is equal to the first priority, and when the determined first packet loss rate is 0, the method further comprises:
sending (S40A-1), by the detection apparatus, M1 third packets over the second loopback path, wherein the M1 third packets are transmitted at a third priority over a first to-be-detected subpath of the second loopback path, and are transmitted at the first priority over other subpaths of the second loopback path, the first to-be-detected subpath specifically comprises at least one of the third subpath or the fourth subpath, and the third priority is lower than the first priority; and
determining (S40A-2), by the detection apparatus according to M1 and a quantity M2 of received third packets returned over the second loopback path, a second packet loss rate that is at the time when packet transmission is performed at the third priority over the first to-be-detected subpath.

4. The method according to any one of claims 1 to 2, wherein the second priority is equal to the first priority, and when the determined first packet loss rate is 0, the method further comprises:
sending (S40B-1), by the detection apparatus, L1 fourth packets over a third loopback path, wherein the third loopback path consists of the first subpath, the second subpath, a second to-be-detected subpath, and a reference subpath, the reference subpath is specifically the third subpath or the fourth subpath, a source network element on the second to-be-detected subpath is a destination network element on the reference subpath, a destination network element on the second to-be-detected subpath is a source network element on the reference subpath, the L1 fourth packets are transmitted at a fourth priority over the second to-be-detected subpath, and are transmitted at the first priority over other subpaths of the third loopback path, and the fourth priority is not higher than the first priority; and
determining (S40B-2), by the detection apparatus according to L1 and a quantity L2 of received fourth packets returned over the third loopback path, a third packet loss rate that is at the time when packet transmission is performed at the fourth priority over the second to-be-detected subpath.

5. The method according to claim 1, wherein
the first packet specifically comprises identifiers of all segments on the second loopback path that are arranged according to a routing sequence and a priority for transmitting the first packet over each segment.

6. A method for implementing packet loss detection, wherein the method comprises:
determining (S10), by a detection apparatus, that there is no packet loss when packet transmission is performed at a first priority over a first loopback path, wherein the first loopback path consists of a first subpath from the detection apparatus to a first network element in a communications network, a second subpath from the first network element to a second network element in the communications network, a third subpath from the second network element to the first network element, and a fourth subpath from the first network element to the detection apparatus, and the first priority is a non-lowest priority;
sending (S20), by the detection apparatus, A1 first packets over a second loopback path, wherein the second loopback path consists of the first subpath, the fourth subpath, a to-be-detected subpath, and a reference subpath, the reference subpath is specifically the second subpath or the third subpath, a source network element on the to-be-detected subpath is a destination network element on the reference subpath, a destination network element on the to-be-detected subpath is a source network element on the reference subpath, the A1 first packets are transmitted at a second priority over the to-be-detected subpath, and are transmitted at the first priority over other subpaths of the second loopback path, and the second priority is not higher than the first priority, wherein each first packet comprises routing information of the second loopback path, and the routing information of the second loopback path is used to instruct a network element on the second loopback path to route the first packet along the second loopback path; and the first packet further comprises priority information, and the priority information in the first packet is used to instruct the network element on the second loopback path to transmit the first packet at the second priority over the to-be-detected subpath, and transmit the first packet at the first priority over the other subpaths of the second loopback path; and
determining (S30), by the detection apparatus according to A1 and a quantity A2 of received first packets returned over the second loopback path, a packet loss rate that is at the time when packet transmission is performed at the second priority over the to-be-detected subpath;
wherein the determining, by a detection apparatus, that there is no packet loss when packet transmission is performed at a first priority over a first loopback path specifically comprises:
sending, by the detection apparatus, B second packets over the first loopback path, wherein the B second packets are transmitted at a probe priority over the first loopback path, and the probe priority is lower than or equal to the first priority; and
when receiving the B second packets returned over the first loopback path, determining, by the detection apparatus, that there is no packet loss when packet transmission is performed at the first priority over the first loopback path.

7. The method according to claim 6, wherein the first priority is the highest priority in the communication network.

8. A detection apparatus for implementing packet loss detection, wherein the detection apparatus comprises a first determining unit (210) and a second determining unit (220), wherein
the first determining unit is configured to determine that there is no packet loss when packet transmission is performed at a first priority over a first loopback path, wherein the first loopback path consists of a first subpath from the detection apparatus to a first network element in a communications network and a second subpath from the first network element to the detection apparatus, and the first priority is a non-lowest priority; and
the second determining unit is configured to: send N1 first packets over a second loopback path, wherein the second loopback path consists of the first subpath, a third subpath from the first network element to a second network element in the communications network, a fourth subpath from the second network element to the first network element, and the second subpath, the N1 first packets are transmitted at the first priority over the first subpath and the second subpath, and are transmitted at a second priority over the third subpath and the fourth subpath, and the second priority is not higher than the first priority; and determine a first packet loss rate between the first network element and the second network element according to N1 and a quantity N2 of received first packets returned over the second loopback path, wherein each first packet comprises routing information of the second loopback path, and the routing information of the second loopback path is used to instruct a network element on the second loopback path to route the first packet along the second loopback path; and the first packet further comprises priority information, and the priority information in the first packet is used to instruct the network element on the second loopback path to transmit the first packet at the first priority over the first subpath and the second subpath, and transmit the first packet at the second priority over the third subpath and the fourth subpath;
wherein the first determining unit is specifically configured to: send Z second packets over the first loopback path, wherein the Z second packets are transmitted at a probe priority over the first loopback path, and the probe priority is lower than or equal to the first priority; and when receiving the Z second packets returned over the first loopback path, determine that there is no packet loss when packet transmission is performed at the first priority over the first loopback path.

9. The detection apparatus according to claim 8, wherein the first priority is the highest priority in the communication network.

10. The detection apparatus according to any one of claims 8 to 9, wherein the second priority is equal to the first priority, and
the second determining unit is further configured to: when the determined first packet loss rate is 0, send M1 third packets over the second loopback path, wherein the M1 third packets are transmitted at a third priority over a first to-be-detected subpath of the second loopback path, and are transmitted at the first priority over other subpaths of the second loopback path, the first to-be-detected subpath specifically comprises at least one of the third subpath or the fourth subpath, and the third priority is lower than the first priority; and determine, according to M1 and a quantity M2 of received third packets returned over the second loopback path, a second packet loss rate that is at the time when packet transmission is performed at the third priority over the first to-be-detected subpath.

11. The detection apparatus according to any one of claims 8 to 9, wherein the second priority is equal to the first priority, and
the second determining unit is further configured to: when the determined first packet loss rate is 0, send L1 fourth packets over a third loopback path, wherein the third loopback path consists of the first subpath, the second subpath, a second to-be-detected subpath, and a reference subpath, the reference subpath is specifically the third subpath or the fourth subpath, a source network element on the second to-be-detected subpath is a destination network element on the reference subpath, a destination network element on the second to-be-detected subpath is a source network element on the reference subpath, the L1 fourth packets are transmitted at a fourth priority over the second to-be-detected subpath, and are transmitted at the first priority over other subpaths of the third loopback path, and the fourth priority is not higher than the first priority; and determine, according to L1 and a quantity L2 of received fourth packets returned over the third loopback path, a third packet loss rate that is at the time when packet transmission is performed at the fourth priority over the second to-be-detected subpath.

12. The detection apparatus according to claim 8, wherein
the first packet specifically comprises identifiers of all segments on the second loopback path that are arranged according to a routing sequence and a priority for transmitting the first packet over each segment.

13. A detection apparatus for implementing packet loss detection, wherein the detection apparatus comprises a first determining unit (310) and a second determining unit (320), wherein
the first determining unit is configured to determine that there is no packet loss when packet transmission is performed at a first priority over a first loopback path, wherein the first loopback path consists of a first subpath from the detection apparatus to a first network element in a communications network, a second subpath from the first network element to a second network element in the communications network, a third subpath from the second network element to the first network element, and a fourth subpath from the first network element to the detection apparatus, and the first priority is a non-lowest priority; and
the second determining unit is configured to: send A1 first packets over a second loopback path, wherein the second loopback path consists of the first subpath, the fourth subpath, a to-be-detected subpath, and a reference subpath, the reference subpath is specifically the second subpath or the third subpath, a source network element on the to-be-detected subpath is a destination network element on the reference subpath, a destination network element on the to-be-detected subpath is a source network element on the reference subpath, the A1 first packets are transmitted at a second priority over the to-be-detected subpath, and are transmitted at the first priority over other subpaths of the second loopback path, and the second priority is not higher than the first priority; and determine, according to A1 and a quantity A2 of received first packets returned over the second loopback path, a packet loss rate that is at the time when packet transmission is performed at the second priority over the to-be-detected subpath, wherein each first packet comprises routing information of the second loopback path, and the routing information of the second loopback path is used to instruct a network element on the second loopback path to route the first packet along the second loopback path; and the first packet further comprises priority information, and the priority information in the first packet is used to instruct the network element on the second loopback path to transmit the first packet at the second priority over the to-be-detected subpath, and transmit the first packet at the first priority over the other subpaths of the second loopback path
wherein the first determining unit is specifically configured to: send B second packets over the first loopback path, wherein the B second packets are transmitted at a probe priority over the first loopback path, and the probe priority is lower than or equal to the first priority; and when receiving the B second packets returned over the first loopback path, determine that there is no packet loss when packet transmission is performed at the first priority over the first loopback path.

14. The detection apparatus according to claim 13, wherein the first priority is the highest priority in the communication network.

## Patentansprüche

1. Verfahren zur Implementierung von Paketverlustdetektion, wobei das Verfahren aufweist:
Bestimmen (S10), durch eine Detektionsvorrichtung, dass kein Paketverlust vorliegt, wenn Paketübertragung mit einer ersten Priorität über einen ersten "Loopbackweg" ausgeführt wird, wobei der erste "Loopbackweg" aus einem ersten Nebenweg von der Detektionsvorrichtung zu einem ersten Netzelement in einem Kommunikationsnetz und einem zweiten Nebenweg vom ersten Netzelement zur Detektionsvorrichtung besteht und die erste Priorität eine nicht-niedrigste Priorität ist;
Senden (S20), durch die Detektionsvorrichtung, von N1 ersten Paketen über einen zweiten "Loopbackweg", wobei der zweite "Loopbackweg" aus dem ersten Nebenweg, einem dritten Nebenweg vom ersten Netzelement zu einem zweiten Netzelement im Kommunikationsnetz, einem vierten Nebenweg vom zweiten Netzelement zum ersten Netzelement und dem zweiten Nebenweg besteht, die N1 ersten Pakete mit der ersten Priorität über den ersten Nebenweg und den zweiten Nebenweg übertragen werden und mit einer zweiten Priorität über den dritten Nebenweg und den vierten Nebenweg übertragen werden und die zweite Priorität nicht höher als die erste Priorität ist, wobei jedes erste Paket Routinginformation des zweiten "Loopbackwegs" aufweist und die Routinginformation des zweiten "Loopbackwegs" zum Anweisen eines zweiten Netzelements auf dem zweiten "Loopbackweg", das erste Paket entlang des zweiten "Loopbackwegs" zu leiten, benutzt wird; und wobei das erste Paket ferner Prioritätsinformation aufweist und die Prioritätsinformation im ersten Paket zum Anweisen des zweiten Netzelements auf dem zweiten "Loopbackweg", das erste Paket mit der ersten Priorität über den ersten Nebenweg und den zweiten Nebenweg zu übertragen und das erste Paket mit der zweiten Priorität über den dritten Nebenweg und den vierten Nebenweg zu übertragen, benutzt wird; und
Bestimmen (S30), durch die Detektionsvorrichtung, einer ersten Paketverlustrate zwischen dem ersten Netzelement und dem zweiten Netzelement gemäß N1 und einer Menge N2 von empfangenen ersten Paketen, die über den zweiten "Loopbackweg" zurückgeschickt wurden;
wobei das Bestimmen, durch eine Detektionsvorrichtung, dass kein Paketverlust vorliegt, wenn Paketübertragung mit einer ersten Priorität über einen ersten "Loopbackweg" ausgeführt wird, spezifisch aufweist:
Senden, durch die Detektionsvorrichtung, von Z zweiten Paketen über den ersten "Loopbackweg", wobei die Z zweiten Pakete mit einer Sondierpriorität über den ersten "Loopbackweg" übertragen werden und die Sondierpriorität niedriger als die oder gleich der ersten Priorität ist; und,
wenn die Z zweiten Pakete, die über den ersten "Loopbackweg" zurückgeschickt werden, empfangen werden, Bestimmen, durch die Detektionsvorrichtung, dass kein Paketverlust vorliegt, wenn Paketübertragung mit der ersten Priorität über den ersten "Loopbackweg" ausgeführt wird.

2. Verfahren nach Anspruch 1, wobei die erste Priorität die höchste Priorität im Kommunikationsnetz ist.

3. Verfahren nach einem der Ansprüche 1 oder 2, wobei die zweite Priorität gleich der ersten Priorität ist, und wenn die bestimmte erste Paketverlustrate 0 ist, das Verfahren ferner aufweist:
Senden (S40A-1), durch die Detektionsvorrichtung, von M1 dritten Paketen über den zweiten "Loopbackweg", wobei die M1 dritten Pakete mit einer dritten Priorität über einen ersten, noch zu erkennenden Nebenweg des zweiten "Loopbackwegs" übertragen werden und mit der ersten Priorität über andere Nebenwege des zweiten "Loopbackwegs" übertragen werden, wobei der erste, noch zu erkennende Nebenweg spezifisch mindestens einen des dritten Nebenwegs oder des vierten Nebenwegs aufweist und die dritte Priorität niedriger als die erste Priorität ist; und
Bestimmen (S40A-2), durch die Detektionsvorrichtung, gemäß M1 und einer Menge M2 von empfangenen dritten Paketen, die über den zweiten "Loopbackweg" zurückgeschickt werden, einer zweiten Paketverlustrate, die zu der Zeit vorliegt, wenn Paketübertragung mit der dritten Priorität über den ersten, noch zu erkennenden Nebenweg ausgeführt wird.

4. Verfahren nach einem der Ansprüche 1 bis 2, wobei die zweite Priorität gleich der ersten Priorität ist, und, wenn die bestimmte erste Paketverlustrate 0 ist, das Verfahren ferner aufweist:
Senden (S40B-1), durch die Detektionsvorrichtung, von L1 vierten Paketen über einen dritten "Loopbackweg", wobei der dritte "Loopbackweg" aus dem ersten Nebenweg, dem zweiten Nebenweg, einem zweiten, noch zu erkennenden Nebenweg und einem Bezugsnebenweg besteht, wobei der Bezugsnebenweg spezifisch der dritte Nebenweg oder der vierte Nebenweg ist, wobei ein Quellnetzelement auf dem zweiten, noch zu erkennenden Nebenweg ein Zielnetzelement auf dem Bezugsnebenweg ist, wobei ein Zielnetzelement auf dem zweiten, noch zu erkennenden Nebenweg ein Quellnetzelement auf dem Bezugsnebenweg ist, wobei die L1 vierten Pakete mit einer vierten Priorität über den zweiten, noch zu erkennenden Nebenweg übertragen werden und mit der ersten Priorität über andere Nebenwege des dritten "Loopbackwegs" übertragen werden und die vierte Priorität nicht höher als die erste Priorität ist; und
Bestimmen (S40B-2), durch die Detektionsvorrichtung, gemäß L1 und einer Menge L2 von empfangenen vierten Paketen, die über den dritten "Loopbackweg" zurückgeschickt werden, einer dritten Paketverlustrate, die zu der Zeit vorliegt, wenn Paketübertragung mit der vierten Priorität über den zweiten, noch zu erkennenden Nebenweg ausgeführt wird.

5. Verfahren nach Anspruch 1, wobei:
das erste Paket spezifisch Kennungen von allen Segmenten auf dem zweiten "Loopbackweg" aufweist, die gemäß einer Routingsequenz und einer Priorität zum Übertragen des ersten Pakets über jedes Segment angeordnet sind.

6. Verfahren zum Implementieren von Paketverlustdetektion, wobei das Verfahren umfasst:
Bestimmen (S10), durch eine Detektionsvorrichtung, dass kein Paketverlust vorliegt, wenn Paketübertragung mit einer ersten Priorität über einen ersten "Loopbackweg" ausgeführt wird, wobei der erste "Loopbackweg" aus einem ersten Nebenweg von der Detektionsvorrichtung zu einem ersten Netzelement in einem Kommunikationsnetz, einem zweiten Nebenweg vom ersten Netzelement zu einem zweiten Netzelement im Kommunikationsnetz, einem dritten Nebenweg vom zweiten Netzelement zum ersten Netzelement und einem vierten Nebenweg vom ersten Netzelement zur Detektionsvorrichtung besteht und die erste Priorität eine nicht-niedrigste Priorität ist;
Senden (S20), durch die Detektionsvorrichtung, von A1 ersten Paketen über einen zweiten "Loopbackweg", wobei der zweite "Loopbackweg" aus dem ersten Nebenweg, dem vierten Nebenweg, einem noch zu erkennenden Nebenweg und einem Bezugsnebenweg besteht, wobei der Bezugsnebenweg spezifisch der zweite Nebenweg oder der dritte Nebenweg ist, wobei ein Quellnetzelement auf dem noch zu erkennenden Nebenweg ein Zielnetzelement auf dem Bezugsnebenweg ist, wobei ein Zielnetzelement auf dem noch zu erkennenden Nebenweg ein Quellnetzelement auf dem Bezugsnebenweg ist, wobei die A1 ersten Pakete mit einer zweiten Priorität über den noch zu erkennenden Nebenweg übertragen werden und mit der ersten Priorität über andere Nebenwege des zweiten "Loopbackwegs" übertragen werden und die zweite Priorität nicht höher als die erste Priorität ist, wobei jedes erste Paket Routinginformation des zweiten "Loopbackwegs" aufweist und die Routinginformation des zweiten "Loopbackwegs" zum Anweisen eines Netzelements auf dem zweiten "Loopbackweg", das erste Paket entlang des zweiten "Loopbackwegs" zu leiten, benutzt wird; und wobei das erste Paket ferner Prioritätsinformation aufweist und die Prioritätsinformation im ersten Paket zum Anweisen des Netzelements auf dem zweiten "Loopbackweg", das erste Paket mit der zweiten Priorität über den noch zu erkennenden Nebenweg zu übertragen und das erste Paket mit der ersten Priorität über die anderen Nebenwege des zweiten "Loopbackwegs" zu übertragen, benutzt wird; und
Bestimmen (S30), durch die Detektionsvorrichtung, gemäß A1 und einer Menge A2 von empfangenen ersten Paketen, die über den zweiten "Loopbackweg" zurückgeschickt wurden, einer Paketverlustrate, die zu der Zeit vorliegt, wenn Paketübertragung mit der zweiten Priorität über den noch zu erkennenden Nebenweg ausgeführt wird;
wobei das Bestimmen, durch eine Detektionsvorrichtung, dass kein Paketverlust vorliegt, wenn Paketübertragung mit einer ersten Priorität über einen ersten "Loopbackweg" ausgeführt wird, spezifisch aufweist:
Senden, durch die Detektionsvorrichtung, von B zweiten Paketen über den ersten "Loopbackweg", wobei die B zweiten Pakete mit einer Sondierpriorität über den ersten "Loopbackweg" übertragen werden und die Sondierpriorität niedriger als die oder gleich der ersten Priorität ist; und,
wenn die B zweiten Pakete, die über den ersten "Loopbackweg" zurückgeschickt werden, empfangen werden, Bestimmen, durch die Detektionsvorrichtung, dass kein Paketverlust vorliegt, wenn Paketübertragung mit der ersten Priorität über den ersten "Loopbackweg" ausgeführt wird.

7. Verfahren nach Anspruch 6, wobei die erste Priorität die höchste Priorität im Kommunikationsnetz ist.

8. Detektionsvorrichtung zur Implementierung von Paketverlustdetektion, wobei die Detektionsvorrichtung eine erste Bestimmungseinheit (210) und eine zweite Bestimmungseinheit (220) aufweist, wobei
die erste Bestimmungseinheit zum Bestimmen konfiguriert ist, dass kein Paketverlust vorliegt, wenn Paketübertragung mit einer ersten Priorität über einen ersten "Loopbackweg" ausgeführt wird, wobei der erste "Loopbackweg" aus einem ersten Nebenweg von der Detektionsvorrichtung zu einem ersten Netzelement in einem Kommunikationsnetz und einem zweiten Nebenweg vom ersten Netzelement zur Detektionsvorrichtung besteht und die erste Priorität eine nicht-niedrigste Priorität ist; und
die zweite Bestimmungseinheit konfiguriert ist zum: Senden von N1 ersten Paketen über einen zweiten "Loopbackweg" ist, wobei der zweite "Loopbackweg" aus dem ersten Nebenweg, einem dritten Nebenweg vom ersten Netzelement zu einem zweiten Netzelement im Kommunikationsnetz, einem vierten Nebenweg vom zweiten Netzelement zum ersten Netzelement und dem zweiten Nebenweg besteht, die N1 ersten Pakete mit der ersten Priorität über den ersten Nebenweg und den zweiten Nebenweg übertragen werden und mit einer zweiten Priorität über den dritten Nebenweg und den vierten Nebenweg übertragen werden und die zweite Priorität nicht höher als die erste Priorität ist; und zum Bestimmen einer ersten Paketverlustrate zwischen dem ersten Netzelement und dem zweiten Netzelement gemäß N1 und einer Menge N2 von empfangenen ersten Paketen, die über den zweiten "Loopbackweg" zurückgeschickt wurden, wobei jedes erste Paket Routinginformation des zweiten "Loopbackwegs" aufweist und die Routinginformation des zweiten "Loopbackwegs" zum Anweisen eines Netzelements auf dem zweiten "Loopbackweg", das erste Paket entlang des zweiten "Loopbackwegs" zu leiten, benutzt wird; und wobei das erste Paket ferner Prioritätsinformation aufweist und die Prioritätsinformation im ersten Paket zum Anweisen des Netzelements auf dem zweiten "Loopbackweg", das erste Paket mit der ersten Priorität über den ersten Nebenweg und den zweiten Nebenweg zu übertragen und das erste Paket mit der zweiten Priorität über den dritten Nebenweg und den vierten Nebenweg zu übertragen, benutzt wird;
wobei die erste Bestimmungseinheit spezifisch konfiguriert ist zum: Senden von Z zweiten Paketen über den ersten "Loopbackweg", wobei die Z zweiten Pakete mit einer Sondierpriorität über den ersten "Loopbackweg" übertragen werden und die Sondierpriorität niedriger als die oder gleich der ersten Priorität ist; und, wenn die Z zweiten Pakete, die über den ersten "Loopbackweg" zurückgeschickt werden, empfangen werden, Bestimmen, dass kein Paketverlust vorliegt, wenn Paketübertragung mit der ersten Priorität über den ersten "Loopbackweg" ausgeführt wird.

9. Detektionsvorrichtung nach Anspruch 8, wobei die erste Priorität die höchste Priorität im Kommunikationsnetz ist.

10. Detektionsvorrichtung nach einem der Ansprüche 8 bis 9, wobei die zweite Priorität gleich der ersten Priorität ist, und
die zweite Bestimmungseinheit ferner konfiguriert ist zum: wenn die bestimmte erste Paketverlustrate 0 ist, Senden von M1 dritten Paketen über den zweiten "Loopbackweg", wobei die M1 dritten Pakete mit einer dritten Priorität über einen ersten, noch zu erkennenden Nebenweg des zweiten "Loopbackwegs" übertragen werden und mit der ersten Priorität über andere Nebenwege des zweiten "Loopbackwegs" übertragen werden, wobei der erste, noch zu erkennende Nebenweg spezifisch mindestens einen des dritten Nebenwegs oder des vierten Nebenwegs aufweist und die dritte Priorität niedriger als die erste Priorität ist; und Bestimmen gemäß M1 und einer Menge M2 von empfangenen dritten Paketen, die über den zweiten "Loopbackweg" zurückgeschickt werden, einer zweiten Paketverlustrate, die zu der Zeit vorliegt, wenn Paketübertragung mit der dritten Priorität über den ersten, noch zu erkennenden Nebenweg ausgeführt wird.

11. Detektionsvorrichtung nach einem der Ansprüche 8 bis 9, wobei die zweite Priorität gleich der ersten Priorität ist, und
die zweite Bestimmungseinheit ferner konfiguriert ist zum: wenn die bestimmte erste Paketverlustrate 0 ist, Senden von L1 vierten Paketen über einen dritten "Loopbackweg", wobei der dritte "Loopbackweg" aus dem ersten Nebenweg, dem zweiten Nebenweg, einem zweiten, noch zu erkennenden Nebenweg und einem Bezugsnebenweg besteht, wobei der Bezugsnebenweg spezifisch der dritte Nebenweg oder der vierte Nebenweg ist, wobei ein Quellnetzelement auf dem zweiten, noch zu erkennenden Nebenweg ein Zielnetzelement auf dem Bezugsnebenweg ist, wobei ein Zielnetzelement auf dem zweiten, noch zu erkennenden Nebenweg ein Quellnetzelement auf dem Bezugsnebenweg ist, wobei die L1 vierten Pakete mit einer vierten Priorität über den zweiten, noch zu erkennenden Nebenweg übertragen werden und mit der ersten Priorität über andere Nebenwege des dritten "Loopbackwegs" übertragen werden und die vierte Priorität nicht höher als die erste Priorität ist; und Bestimmen gemäß L1 und einer Menge L2 von empfangenen vierten Paketen, die über den dritten "Loopbackweg" zurückgeschickt werden, einer dritten Paketverlustrate, die zu der Zeit vorliegt, wenn Paketübertragung mit der vierten Priorität über den zweiten, noch zu erkennenden Nebenweg ausgeführt wird.

12. Detektionsvorrichtung nach Anspruch 8, wobei
das erste Paket spezifisch Kennungen von allen Segmenten auf dem zweiten "Loopbackweg" aufweist, die gemäß einer Routingsequenz und einer Priorität zum Übertragen des ersten Pakets über jedes Segment angeordnet sind.

13. Detektionsvorrichtung zum Implementieren von Paketverlustdetektion, wobei die Detektionsvorrichtung eine erste Bestimmungseinheit (310) und eine zweite Bestimmungseinheit (320) aufweist, wobei
die erste Bestimmungseinheit zum Bestimmen konfiguriert ist, dass kein Paketverlust vorliegt, wenn Paketübertragung mit einer ersten Priorität über einen ersten "Loopbackweg" ausgeführt wird, wobei der erste "Loopbackweg" aus einem ersten Nebenweg von der Detektionsvorrichtung zu einem ersten Netzelement in einem Kommunikationsnetz, einem zweiten Nebenweg vom ersten Netzelement zu einem zweiten Netzelement im Kommunikationsnetz, einem dritten Nebenweg vom zweiten Netzelement zum ersten Netzelement und einem vierten Nebenweg vom ersten Netzelement zur Detektionsvorrichtung besteht und die erste Priorität eine nicht-niedrigste Priorität ist; und
die zweite Bestimmungseinheit konfiguriert ist zum: Senden von A1 ersten Paketen über einen zweiten "Loopbackweg", wobei der zweite "Loopbackweg" aus dem ersten Nebenweg, dem vierten Nebenweg, einem noch zu erkennenden Nebenweg und einem Bezugsnebenweg besteht, wobei der Bezugsnebenweg spezifisch der zweite Nebenweg oder der dritte Nebenweg ist, wobei ein Quellnetzelement auf dem noch zu erkennenden Nebenweg ein Zielnetzelement auf dem Bezugsnebenweg ist, wobei ein Zielnetzelement auf dem noch zu erkennenden Nebenweg ein Quellnetzelement auf dem Bezugsnebenweg ist, wobei die A1 ersten Pakete mit einer zweiten Priorität über den noch zu erkennenden Nebenweg übertragen werden und mit der ersten Priorität über andere Nebenwege des zweiten "Loopbackwegs" übertragen werden und die zweite Priorität nicht höher als die erste Priorität ist; und Bestimmen, gemäß A1 und einer Menge A2 von empfangenen ersten Paketen, die über den zweiten "Loopbackweg" zurückgeschickt wurden, einer Paketverlustrate, die zu der Zeit vorliegt, wenn Paketübertragung mit der zweiten Priorität über den noch zu erkennenden Nebenweg ausgeführt wird, wobei jedes erste Paket Routinginformation des zweiten "Loopbackwegs" aufweist und die Routinginformation des zweiten "Loopbackwegs" zum Anweisen eines Netzelements auf dem zweiten "Loopbackweg", das erste Paket entlang des zweiten "Loopbackwegs" zu leiten, benutzt wird; und wobei das erste Paket ferner Prioritätsinformation aufweist und die Prioritätsinformation im ersten Paket zum Anweisen des Netzelements auf dem zweiten "Loopbackweg", das erste Paket mit der zweiten Priorität über den noch zu erkennenden Nebenweg zu übertragen und das erste Paket mit der ersten Priorität über die anderen Nebenwege des zweiten "Loopbackwegs" zu übertragen, benutzt wird,
wobei die erste Bestimmungseinheit spezifisch konfiguriert ist zum: Senden von B zweiten Paketen über den ersten "Loopbackweg", wobei die B zweiten Pakete mit einer Sondierpriorität über den ersten "Loopbackweg" übertragen werden und die Sondierpriorität niedriger als die oder gleich der ersten Priorität ist; und,
wenn die B zweiten Pakete, die über den ersten "Loopbackweg" zurückgeschickt werden, empfangen werden, Bestimmen, dass kein Paketverlust vorliegt, wenn Paketübertragung mit der ersten Priorität über den ersten "Loopbackweg" ausgeführt wird.

14. Detektionsvorrichtung nach Anspruch 13, wobei die erste Priorität die höchste Priorität im Kommunikationsnetz ist.

## Revendications

1. Procédé pour réaliser la détection d'une perte de paquet, dans lequel le procédé comprend :
la détermination (S10), par un appareil de détection, du fait qu'il n'y a pas de perte de paquet lorsque la transmission de paquets est effectuée avec une première priorité sur un premier chemin de bouclage, dans lequel le premier chemin de bouclage consiste en un premier sous-chemin allant de l'appareil de détection à un premier élément de réseau dans un réseau de communication et en un second sous-chemin allant du premier élément de réseau à l'appareil de détection, et la première priorité est une valeur non égale à la priorité la plus basse ;
l'envoi (S20), par le dispositif de détection, de N1 premiers paquets sur un second chemin de bouclage, dans lequel le second chemin de bouclage est constitué du premier sous-chemin, d'un troisième sous-chemin allant du premier élément de réseau vers un second élément de réseau dans le réseau de communication, d'un quatrième sous-chemin allant du second élément de réseau au premier élément de réseau, et du second sous-chemin, les N1 premiers paquets sont transmis avec la première priorité sur le premier sous-chemin et le second sous-chemin, et sont transmis avec une seconde priorité sur le troisième sous-chemin et le quatrième sous-chemin, et la seconde priorité n'est pas supérieure à la première priorité, dans lequel chaque premier paquet comprend des informations de routage du second chemin de bouclage, et les informations de routage du second chemin de bouclage sont utilisées pour ordonner à un élément de réseau situé sur le second chemin de bouclage d'acheminer le premier paquet le long du second chemin de bouclage ; et le premier paquet comprend en outre des informations de priorité, et les informations de priorité contenues dans le premier paquet sont utilisées pour donner des instructions à l'élément de réseau sur le second chemin de bouclage pour transmettre le premier paquet avec la première priorité sur le premier sous-chemin et le second sous-chemin, et pour transmettre le premier paquet avec la seconde priorité sur le troisième sous-chemin et le quatrième sous-chemin ; et
la détermination (S30), à l'aide de l'appareil de détection, d'un premier taux de perte de paquets entre le premier élément de réseau et le second élément de réseau conformément à N1 et une quantité N2 de premiers paquets reçus renvoyés sur le second chemin de bouclage ;
dans lequel la détermination, par un appareil de détection, du fait qu'il n'y a pas de perte de paquet lorsque la transmission de paquets est effectuée avec une première priorité sur un premier chemin de bouclage, comprend en particulier :
l'envoi, par le dispositif de détection, de Z seconds paquets sur le premier chemin de bouclage, dans lequel les Z seconds paquets sont transmis avec une priorité de sondage sur le premier chemin de bouclage et la priorité de sondage est inférieure ou égale à la première priorité ; et
lors de la réception des Z seconds paquets renvoyés sur le premier chemin de bouclage, la détermination, par l'appareil de détection, du fait qu'il n'y a pas de perte de paquet lorsque la transmission de paquets est effectuée avec la première priorité sur le premier chemin de bouclage.

2. Procédé selon la revendication 1, dans lequel la première priorité est la plus haute priorité au sein du réseau de communication.

3. Procédé selon l'une quelconque des revendications 1 et 2, dans lequel la seconde priorité est égale à la première priorité, et lorsque le premier taux de perte de paquets déterminé est 0, le procédé comprend en outre les étapes suivantes :
l'envoi (S40A-1), par le dispositif de détection, de M1 troisièmes paquets sur le second chemin de bouclage, dans lequel les M1 troisièmes paquets sont transmis avec une troisième priorité sur un premier sous-chemin à détecter du second chemin de bouclage, et sont transmis avec la première priorité sur les autres sous-chemins du second chemin de bouclage, le premier sous-chemin à détecter comprend en particulier au moins un parmi le troisième sous-chemin ou le quatrième sous-chemin, et la troisième priorité est inférieure à la première priorité ; et
la détermination (S40A-2), par l'appareil de détection en fonction de M1 et d'un nombre M2 de troisièmes paquets reçus renvoyés sur le second chemin de bouclage, d'un second taux de perte de paquets qui est au moment où la transmission de paquets est effectuée à la troisième priorité sur le premier sous-chemin à détecter.

4. Procédé selon l'une quelconque des revendications 1 et 2, dans lequel la seconde priorité est égale à la première priorité, et lorsque le premier taux de perte de paquets déterminé est 0, le procédé comprend en outre les étapes suivantes :
l'envoi (S40B-1), par le dispositif de détection, de L1 premiers paquets sur un troisième chemin de bouclage, dans lequel le troisième chemin de bouclage est constitué du premier sous-chemin, du second sous-chemin, d'un second sous-chemin à détecter, et d'un sous-chemin de référence, le sous-chemin de référence est spécifiquement le troisième sous-chemin ou le quatrième sous-chemin, un élément du réseau source sur le second sous-chemin à détecter est un élément de réseau de destination sur le sous-chemin de référence, un élément du réseau de destination sur le second sous-chemin à détecter est un élément de réseau source sur le sous-chemin de référence, les quatrièmes paquets L1 sont transmis avec une quatrième priorité sur le second sous-chemin à détecter, et sont transmis avec la première priorité sur les autres sous-chemins du troisième chemin de bouclage, et la quatrième priorité n'est pas supérieure à la première priorité ; et
la détermination (S40B-2), par l'appareil de détection selon L1 et une quantité L2 de quatrièmes paquets reçus renvoyés sur le troisième chemin de bouclage, d'un troisième taux de perte de paquets correspondant au moment où la transmission de paquets est effectuée avec la quatrième priorité sur le second sous-chemin à détecter.

5. Procédé selon la revendication 1, dans lequel
le premier paquet comprend spécifiquement des identifiants de tous les segments sur le second chemin de bouclage qui sont agencés en fonction d'une séquence de routage et d'une priorité pour la transmission du premier paquet sur chaque segment.

6. Procédé pour réaliser la détection d'une perte de paquet, dans lequel le procédé comprend :
la détermination (S10), par un appareil de détection, du fait qu'il n'y a pas de perte de paquet lorsque la transmission de paquets est effectuée avec une première priorité sur un premier chemin de bouclage, dans lequel le premier chemin de bouclage est constitué d'un premier sous-chemin allant de l'appareil de détection à un premier élément de réseau dans un réseau de communication, un second sous-chemin allant du premier élément de réseau à un second élément de réseau dans le réseau de communication, un troisième sous-chemin allant du second élément de réseau au premier élément de réseau, et un quatrième sous-chemin allant du premier élément de réseau à l'appareil de détection, et la première priorité n'est pas la priorité la plus basse ;
l'envoi (S20), par le dispositif de détection, de A1 premiers paquets sur un second chemin de bouclage, dans lequel le second chemin de bouclage est constitué du premier sous-chemin, du quatrième sous-chemin, d'un sous-chemin à détecter, et d'un sous-chemin de référence, le sous-chemin de référence est spécifiquement le second sous-chemin ou le troisième sous-chemin, un élément de réseau source sur le sous-chemin à détecter est un élément de réseau de destination sur le sous-chemin de référence, un élément de réseau de destination sur le sous-chemin à détecter est un élément de réseau source sur le sous-chemin de référence, les A1 premiers paquets sont transmis avec la seconde priorité sur le sous-chemin à détecter et sont transmis avec une première priorité sur d'autres sous-chemins du second chemin de bouclage, et la seconde priorité n'est pas supérieure à la première priorité, dans lequel chaque premier paquet comprend des informations de routage du second chemin de bouclage, et les informations de routage du second chemin de bouclage sont utilisées pour ordonner à un élément de réseau situé sur le second chemin de bouclage d'acheminer le premier paquet le long du second chemin de bouclage ; et le premier paquet comprend en outre des informations de priorité, et les informations de priorité dans le premier paquet sont utilisées pour ordonner à l'élément de réseau sur le second chemin de bouclage de transmettre le premier paquet à la seconde priorité sur le sous-chemin à détecter, et de transmettre le premier paquet avec la première priorité sur le premier sous-chemin et le second sous-chemin ; et
la détermination (S30), par l'appareil de détection en fonction de A1 et d'un nombre A2 de premiers paquets reçus renvoyés sur le second chemin de bouclage, d'un taux de perte de paquets correspondant au moment où la transmission de paquets est effectuée à la seconde priorité sur le sous-chemin à détecter ;
dans lequel la détermination, par un appareil de détection, du fait qu'il n'y a pas de perte de paquet lorsque la transmission de paquets est effectuée avec une première priorité sur un premier chemin de bouclage, comprend en particulier :
l'envoi, par le dispositif de détection, de B seconds paquets sur le premier chemin de bouclage, dans lequel les B seconds paquets sont transmis avec une priorité de sondage sur le premier chemin de bouclage et la priorité de sondage est inférieure ou égale à la première priorité ; et
lors de la réception des B seconds paquets renvoyés sur le premier chemin de bouclage, la détermination, par l'appareil de détection, du fait qu'il n'y a pas de perte de paquet lorsque la transmission de paquets est effectuée avec la première priorité sur le premier chemin de bouclage.

7. Procédé selon la revendication 6, dans lequel la première priorité est la plus haute priorité au sein du réseau de communication.

8. Appareil de détection pour réaliser la détection d'une perte de paquet, dans lequel l'appareil de détection comprend une première unité de détermination (210) et une seconde unité de détermination (220), dans lequel
la première unité de détermination est configurée pour déterminer qu'il n'y a pas de perte de paquet lorsque la transmission de paquets est effectuée avec une première priorité sur un premier chemin de bouclage, dans lequel le premier chemin de bouclage consiste en un premier sous-chemin allant de l'appareil de détection à un premier élément de réseau dans un réseau de communication et en un second sous-chemin allant du premier élément de réseau à l'appareil de détection, et la première priorité est une valeur non égale à la priorité la plus basse ; et
la seconde unité de détermination est configurée pour : envoyer N1 premiers paquets sur un second chemin de bouclage, dans lequel le second chemin de bouclage est constitué du premier sous-chemin, d'un troisième sous-chemin allant du premier élément de réseau vers un second élément de réseau dans le réseau de communication, d'un quatrième sous-chemin allant du second élément de réseau au premier élément de réseau, et du second sous-chemin, les N1 premiers paquets sont transmis avec la première priorité sur le premier sous-chemin et le second sous-chemin, et sont transmis avec une seconde priorité sur le troisième sous-chemin et le quatrième sous-chemin, et la seconde priorité n'est pas supérieure à la première priorité ; et déterminer un premier taux de perte de paquets entre le premier élément de réseau et le second élément de réseau selon N1 et une quantité N2 de premiers paquets reçus renvoyés sur le second chemin de bouclage, dans lequel chaque premier paquet comprend des informations de routage du second chemin de bouclage, et les informations de routage du second chemin de bouclage sont utilisées pour ordonner à un élément de réseau situé sur le second chemin de bouclage d'acheminer le premier paquet le long du second chemin de bouclage ; et le premier paquet comprend en outre des informations de priorité, et les informations de priorité dans le premier paquet sont utilisées pour ordonner à l'élément de réseau sur le second chemin de bouclage de transmettre le premier paquet avec la première priorité sur le premier sous-chemin et le second sous-chemin, et de transmettre le premier paquet à la seconde priorité sur le troisième sous-chemin et le quatrième sous-chemin ;
dans lequel la première unité de détermination est spécifiquement configurée pour :
l'envoi de Z seconds paquets sur le premier chemin de bouclage, dans lequel les Z seconds paquets sont transmis avec une priorité de sondage sur le premier chemin de bouclage et la priorité de sondage est inférieure ou égale à la première priorité ; et
lors de la réception des Z seconds paquets renvoyés sur le premier chemin de bouclage, la détermination du fait qu'il n'y a pas de perte de paquet lorsque la transmission de paquets est effectuée avec la première priorité sur le premier chemin de bouclage.

9. Appareil de détection selon la revendication 8, dans lequel la première priorité est la plus haute priorité au sein du réseau de communication.

10. Appareil de détection selon l'une quelconque des revendications 8 et 9, dans lequel la seconde priorité est égale à la première priorité, et
la seconde unité de détermination est en outre configurée pour : lorsque le taux de perte déterminé pour les premiers paquet est 0, envoyer M1 troisièmes paquets sur le second chemin de bouclage, dans lequel les M1 troisièmes paquets sont transmis avec une troisième priorité sur un premier sous-chemin à détecter du second chemin de bouclage, et sont transmis avec la première priorité sur les autres sous-chemins du second chemin de bouclage, le premier sous-chemin à détecter comprend spécifiquement au moins un des troisième et quatrième chemins, et la troisième priorité est inférieure à la première priorité ; et déterminer, en fonction de M1 et d'un nombre M2 de troisièmes paquets reçus renvoyés sur le second chemin de bouclage, un second taux de perte de paquets qui est au moment où la transmission de paquets est effectuée à la troisième priorité sur le premier sous-chemin à détecter.

11. Appareil de détection selon l'une quelconque des revendications 8 et 9, dans lequel la seconde priorité est égale à la première priorité, et
la seconde unité de détermination est en outre configurée pour : lorsque le taux de perte déterminé pour les premiers paquets est 0, envoyer L1 quatrièmes paquets sur le troisième chemin de bouclage, dans lequel le troisième chemin de bouclage est constitué du premier sous-chemin, du second sous-chemin, d'un second sous-chemin à détecter, et d'un sous-chemin de référence, le sous-chemin de référence est spécifiquement le troisième sous-chemin ou le quatrième sous-chemin, un élément de réseau source sur le second sous-chemin à détecter est un élément de réseau de destination sur le sous-chemin de référence, un élément de réseau de destination sur le second sous-chemin à détecter est un élément de réseau source sur le sous-chemin de référence, les L1 quatrièmes paquets sont transmis avec une quatrième priorité sur le second sous-chemin à détecter et sont transmis avec la première priorité sur d'autres sous-chemins du troisième chemin de bouclage, et la quatrième priorité n'est pas supérieure à la première priorité ; et déterminer, en fonction de L1 et d'un nombre L2 de quatrièmes paquets reçus renvoyés sur le troisième chemin de bouclage, un troisième taux de perte de paquets qui est au moment où la transmission de paquets est effectuée à la quatrième priorité sur le second sous-chemin à détecter.

12. Appareil de détection selon la revendication 8, dans lequel
le premier paquet comprend spécifiquement des identifiants de tous les segments sur le second chemin de bouclage qui sont agencés en fonction d'une séquence de routage et d'une priorité pour la transmission du premier paquet sur chaque segment.

13. Appareil de détection pour réaliser la détection d'une perte de paquet, dans lequel l'appareil de détection comprend une première unité de détermination (310) et une seconde unité de détermination (320), dans lequel
la première unité de détermination est configurée pour déterminer qu'il n'y a pas de perte de paquet lorsque la transmission de paquets est effectuée avec une première priorité sur un premier chemin de bouclage, dans lequel le premier chemin de bouclage consiste en un premier sous-chemin allant de l'appareil de détection à un premier élément de réseau dans un réseau de communications, en un second sous-chemin allant du premier élément de réseau à un second élément de réseau dans le réseau de communications, en un troisième sous-chemin allant du second élément de réseau au premier élément de réseau et en un quatrième sous-chemin allant du premier élément de réseau à l'appareil de détection, et la première priorité n'est pas la priorité la plus basse ; et
la seconde unité de détermination est configurée pour : envoyer A1 premiers paquets sur un second chemin de bouclage, dans lequel le second chemin de bouclage est constitué du premier sous-chemin, du quatrième sous-chemin, d'un sous-chemin à détecter, et d'un sous-chemin de référence, le sous-chemin de référence est spécifiquement le second sous-chemin ou le troisième sous-chemin, un élément de réseau source sur le sous-chemin à détecter est un élément de réseau de destination sur le sous-chemin de référence, un élément de réseau de destination sur le sous-chemin à détecter est un élément de réseau source sur le sous-chemin de référence, les A1 premiers paquets sont transmis avec la seconde priorité sur le sous-chemin à détecter et sont transmis avec une première priorité sur d'autres sous-chemins du second chemin de bouclage, et la seconde priorité n'est pas supérieure à la première priorité ; et déterminer, en fonction de A1 et d'un nombre A2 de premiers paquets reçus renvoyés sur le second chemin de bouclage, un taux de perte de paquets qui est au moment où la transmission de paquets est effectuée à la seconde priorité sur le sous-chemin à détecter, dans lequel chaque premier paquet comprend des informations de routage du second chemin de bouclage, et les informations de routage du second chemin de bouclage sont utilisées pour ordonner à un élément de réseau situé sur le second chemin de bouclage d'acheminer le premier paquet le long du second chemin de bouclage ; et le premier paquet comprend en outre des informations de priorité, et les informations de priorité dans le premier paquet sont utilisées pour ordonner à l'élément de réseau sur le second chemin de bouclage de transmettre le premier paquet avec la seconde priorité sur le sous-chemin à détecter et de transmettre le premier paquet avec la première priorité sur les autres sous-chemins du second chemin de bouclage
dans lequel la première unité de détermination est spécifiquement configurée pour :
envoyer B seconds paquets sur le premier chemin de bouclage, dans lequel les B seconds paquets sont transmis avec une priorité de sondage sur le premier chemin de bouclage et la priorité de sondage est inférieure ou égale à la première priorité ; et
lors de la réception des B seconds paquets renvoyés sur le premier chemin de bouclage, déterminer qu'il n'y a pas de perte de paquet lorsque la transmission de paquets est effectuée avec la première priorité sur le premier chemin de bouclage.

14. Appareil de détection selon la revendication 13, dans lequel la première priorité est la plus haute priorité au sein du réseau de communication.
